Europäisches Patentamt

(19) European Patent Office

Office européen des brevets

(11) Publication number: **0 005 619**
A2

(12) **EUROPEAN PATENT APPLICATION**

(21) Application number: 79300825.1

(22) Date of filing: 14.05.79

(51) Int. Cl.²: **C 08 F 2/18**
**B 01 F 3/08**

(30) Priority: 19.05.78 US 907463

(43) Date of publication of application:
28.11.79 Bulletin 79/24

(84) Designated Contracting States:
DE FR GB IT NL

(71) Applicant: Rohm and Haas Company
Independence Mall West
Philadelphia, Pennsylvania 19105(US)

(72) Inventor: Albright, Robert Lee
36 Autumn Road
Churchville Pennsylvania, 18966(US)

(72) Inventor: Cichy, Paul Timothy
301 Prospect Avenue
Langhorne Pennsylvania, 19047(US)

(72) Inventor: Roberts, Edward Jeffrey
Village of Stoney Run, Apt. 51A
Maple Shade New Jersey, 08052(US)

(74) Representative: Angell, David Whilton et al,
Rohm and Haas Company Patent Department
Chesterfield House Barter Street
London WC1A 2TP(GB)

(54) Suspension polymerisation process, apparatus and product.

(57) In suspension polymerisation, for example in the production of polymer beads for use in the preparation of ion exchange resins, the formation of monomer suspension using a baffled in-line mixer, most preferably with a specified liquid flow rate, and subsequently polymerising, without bead coalescence, in a stirred polymerisation vessel produces beads of narrow particle size distribution. Preferred beads have an average particle diameter of less than 200 microns and a particle Standard Deviation of less than 100 microns.

Fig. 1.

## Suspension Polymerisation Process, Apparatus and Product

This invention is concerned with suspension polymerisation process, apparatus and product. The process can give polymer particles of controlled average particle size and size distribution. The technical field to which the invention relates is the formation, by suspension polymerisation of polymer particles, useful for example as adsorbent or ion exchange polymer beads.

Polymers for ion exchange resins have traditionally been prepared by first mechanically mixing, in a suitable large vessel (kettle) equipped with an agitator, a monomer mixture containing a polymerisation inhibitor and an aqueous phase containing suspension (dispersion) stabilizers. Upon mixing with the agitator, the monomer phase is broken into droplets of various sizes and these droplets are subsequently polymerised in the vessel at elevated temperatures, normally in the range of 50-100°C. In general, the same agitator provides the mechanical energy needed to form the suspension initially and to maintain the suspension during subsequent thermal polymerisation. The reactor kettle also must serve during suspension formation and subsequent polymerisation and, therefore, must have a configuration which is adaptable to both purposes.

Due to their multiple functionality both reactor kettle and agitator have been designed with various compromises needed to serve the dual purposes. Also, agitator blade location and type, and kettle baffles and dimensions have been circumscribed to a large measure by the traditional process. Kettles not so designed, cannot be readily adapted to suspension polymerisation, particularly to suspension polymerisation of ion exchange polymer beads.

The traditional method of forming monomer droplets by agitation in a kettle is also not entirely satisfactory due to the inherent sizes of droplets produced and the resultant polymer particles formed during subsequent polymerisation. In conventional aqueous suspension in a kettle, the product produced has a wide particle size distribution, containing large amounts of very small undersized particles and very large oversized particles, compared to the average particle size diameter. This method also does not lend itself well to the formation of particles of different average diameters although the literature abounds in special techniques aimed at controlling particle size.

It is generally known to reduce average particle size in a conventional kettle by using high agitation rates although this reduction tends to plateau at higher agitation rates. Another known method for controlling particle size and size distribution involves utilizing special additives to the aqueous phase, such as surfactants, together with high agitation rates. This latter technique, however, is somewhat unsatisfactory since it consumes expensive chemical additives which are difficult if not impossible to recover.

Further, both of the prior techniques for controlling particle size and size distribution have inherent limitations and suffer greatly from inconsistency from batch to batch.

To provide narrow particle distribution and the small size particles required for many ion exchange operations, such as chromatographic separations, it has normally been necessary to segregate suspension produced particles into different sizes. The most common technique for particle segregation has been mechanical screening. The undersized and oversized ion exchange polymer particles removed are not normally useful for most ion exchange purposes and, therefore, must be utilised for economically less desirable purposes or scrapped. If at all possible, screening of resin products is to be avoided since it is an inefficient, expensive and sometimes wasteful practice. In theory, the most desirable process for suspension polymerisation is one in which the product as made does not require segregation but initially contains the correct size and particle distribution for the intended commercial purpose, such as in ion exchange treatment.

More recently, attempts have been made to divide suspension polymerisation into separate unit operations, namely, i) suspension formation and, 2) thermal polymerisation. This polymerisation technique may involve the use of different forms of energy to form the suspension droplets and to polymerize (or cure) the monomer suspension once formed. According to a method described in U.S. Patent No. 3,922,255, resin particles are produced by jetting monomer droplets into an aqueous suspending medium and thereafter causing the suspension to cure in a polymerisation kettle under agitation with a paddle agitator. By this technique greater flexibility of the polymerisation kettle and agitator design are permitted since the kettle and agitator do not have to fulfil the dual purpose of breaking the monomer phase into droplets and providing suitable agitation characteristics during the subsequent polymerisation. Unfortunately, while the jetting technique does lend itself readily to the formation of uniformly sized beads, even to narrow particle size distribution, it suffers from a number of disadvantages. In particular, jetting normally requires the formation of droplets in a large volume of suspension medium thus making it difficult (without monomer concentration) to produce a suspension high in organic content, that is, having 30-65% by volume of monomers in the dispersion. The slower rate of droplet formation from jetting units also tends to limit the process to continuous operations rather than the traditional batch type operations practiced in kettles. Further, the continuous process employs large units or holding columns to store preformed monomer droplets as feed for a plurality of kettles, a processing configuration which leads to large and expensive equipment.

In view of the foregoing disadvantages inherent in the prior processes for suspension polymerisation, a new approach to the unit operations of suspension polymerisation has long been needed in this art.

We have now found a process for producing polymer beads which allows controllable selection of average particle diameters with narrow particle size distributions and makes it possible to form ion exchange copolymer particles having low average particle diameters and narrow particle size distribution, without mechanical segregation of particles of different sizes,

The invention thus provides, in one aspect, particles of suspension polymer, which have not been subject to particle size segregation, having an average particle diameter of less than 200 microns and a particle Standard Deviation of less than 100 microns.

In a two-step process of this invention using separate modes of agitation for forming the suspension and curing the monomer droplets there may be produced relatively uniformly sized small ion exchange copolymer and resin beads.

The process and apparatus of this invention utilizes an in-line mixer as the means of forming an aqueous suspension of monomer in water prior to thermal polymerisation. The method is readily adaptable to suspension polymerisation of ion exchange polymer beads in a suspension kettle of the type generally used as well as other kettles of different configurations and sizes. Further, in the method there may be used aqueous suspension media not substantially different from those generally used for conventional polymerisation.

Accordingly this invention provides a suspension polymerisation process wherein organic monomer-containing and aqueous phases are passed into intimate contact within a baffled in-line mixer to form an aqueous suspension of monomer-containing organic droplets which is then passed into a polymerisation vessel where it is heated to cause formation of polymer beads while undergoing sufficient agitation to achieve heat transfer without coagulation of the monomer droplets.

The apparatus preferably used in the invention includes an in-line mixer having a plurality of stationary baffle elements and concentric inlet orifices which orifices abut the first baffle element in the static in-line mixer.

In this invention the function of the polymerisation kettle is only for the polymerisation, with the suspension being first formed by the in-line mixer. Consequently not only does this new process allow for the use of many types of kettles which would not ordinarily be useful in suspension polymerisation, but allows for the design of polymerisation kettles having optional size, baffling, agitators, heat transfer surfaces, and other parameters suitable for the polymerisation.

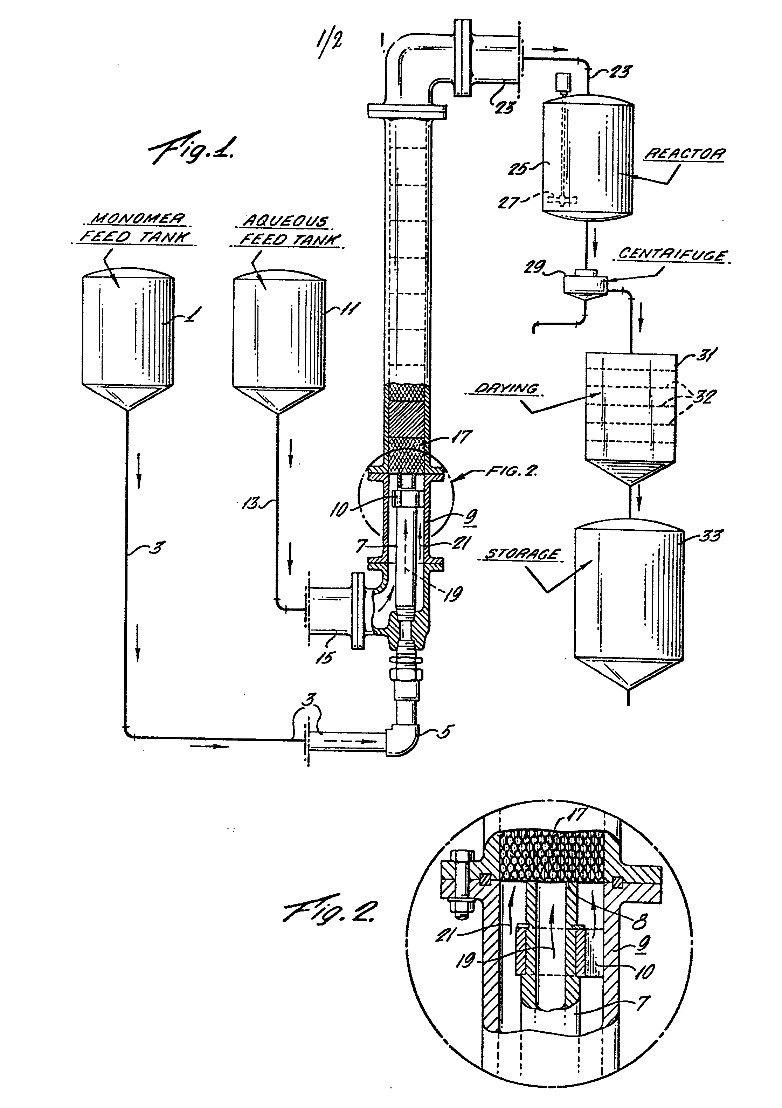

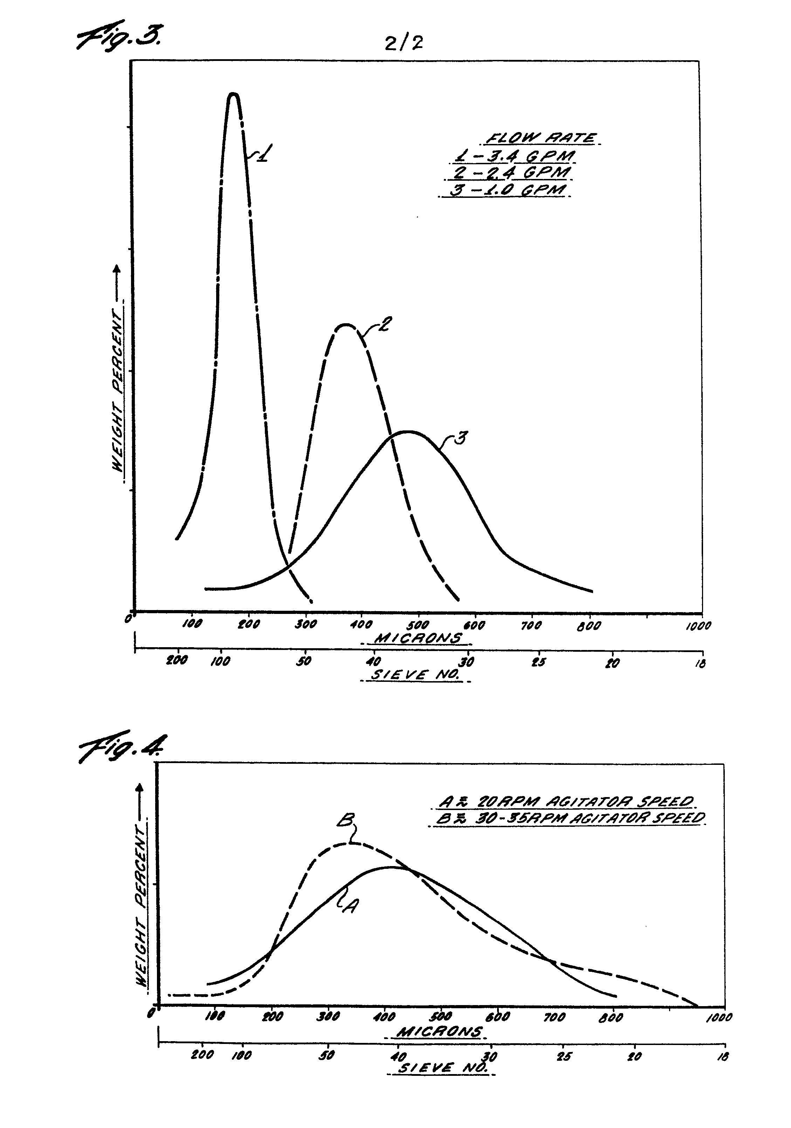

This invention will now be described with reference to the accompanying drawings wherein: Figure 1 shows, partly schematically and partly in sectional detail, one embodiment of apparatus of the invention; Figure 2 shows the indicated part of Figure 1 in enlarged cross-section; Figures 3 and 4 show particle size distributions obtained by the invention and by conventional methods respectively.

Referring now to Figure 1, monomer feed tank 1 is for holding a monomer or comonomer mix, such as styrene and divinylbenzene, and a polymerisation initiator, such as benzoyl peroxide. Pipe 3, the elbow 5 and pipe 7 are for carrying monomer mix, the pipe 7 being concentric within a pipe 9 defined by the housing enclosing pipe 7. The concentric relationship between the pipes 7 and 9 is maintained by a spider 10. The pipe 7, is connected via various fittings (not numbered), to the pipe 3. Aqueous feed tank 11 is for containing aqueous suspension medium. The aqueous medium may contain chemical additives to prevent coalescence of the monomer droplets when they are eventually formed. Pipe 13 and the adapter 15 connect tank 11 with pipe 9. The end 8 of pipe 7 abuts against a first in-line mixer element 17.

In use a stream 19 of monomer mix and a stream 21 of aqueous medium enter the in-line mixer element 17 and are conducted through a multitude of in-line mixer elements preferably turned 90° to one another for optimum mixing. The monomer mix stream 19 and the aqueous dispersion stream 21 are broken into a multitude of streams as both streams pass through the in-line mixer elements. The multitude of streams combine with one another, the monomer stream being broken into substantially uniform sized droplets.

Exit pipe 23 is for conducting intimately mixed monomer droplets in aqueous dispersion from the in-line mixer elements into reactor kettle 25 which is equipped with an agitator 27 which can be turned at a speed sufficient to provide good heat transfer within the mixture but insufficient to effect the integrity of the size of the monomer droplets. The polymerisation reaction can be carried out in kettle 25 at a temperature of 50 to 100°C and the resultant polymerised beads can be passed into a centrifuge 29 where the polymerised beads can be dewatered. A drying vessel 31, containing trays 32 is for drying the beads and a bead storage vessel 33 is provided.

Figure 2 shows in more detail how the spider 10 maintains the concentric relationship of the pipes 7 and 9. In use monomer-containing stream 19 is conducted, by means of the end 8 of the pipe 7, directly into the in-line mixer element 17 where the streams 19 and 21 are mixed together, the stream 19 being broken into uniform size droplets as it passes through the static mixer elements.

Figures 3 and 4 graphically compare particle size distributions between beads made by in-line mixing (Figure 3) at different flow rates and beads made according to the prior art in a polymer kettle (Figure 4) at two different paddle speeds. Figure 4 depicts only typical data whereas Figure 3 is compiled from actual data obtained from the Koch in-line mixer. The data for Figure 3 were obtained from a vinylbenzylchloride (VBC) monomer mixture at three flow rates, namely 1, 2.4 and 3.4 U.S. gallons per minute of flow. At the lower flow rate the curve represents a typical bell distribution approaching the wide distribution commonly found in agitated kettles, for example the distribution found in curves A and B of Figure 4. As the flow rate is increased the peak of the distribution curve (Figure 3) becomes higher and the curve width decreases, indicating higher concentrations of particles in a narrower size distribution range. It should be noted also that the average particle diameter decreases substantially as the flow rate is increased, causing a shift to smaller particles of more uniform size range.

By contrast with Figure 3, Figure 4 illustrates wide distribution of particle size using normal agitator velocity (about 20 rpms) in a standard kettle (curve A). An increase in paddle speed in the kettle will cause a shifting of the distribution toward smaller particle sizes but with no appreciable change in distribution (curve B). As stated previously, agitator speed can have an effect upon particle sizes but, by itself, cannot produce distributions approaching those found with the in-line mixer. The use of large amounts of various chemical additives to the aqueous suspending medium may further affect the results produced in the kettle, but it is believed even such additives cannot duplicate the narrow distribution of particles obtainable by in-line mixing.

The in-line mixers, sometimes known as static processors, in-line blenders or static reactors, have been known heretofore as suitable for achieving close contact between different phases, such as is required in a chemical reaction. The in-line mixer operates on the principle that a stationary baffle installed in a pipe will utilize the energy of the flowing fluids to produce intimate contact and homogenisation of the fluids. The baffle represents a motionless mixer, and provides appreciable mixing especially under turbulent flow conditions. Unfortunately, in many instances, the mixing under turbulent flow conditions is unpredictable as equipment size and flow conditions change. In general, the baffles may be installed in any round, rectangular or otherwise shaped assembly, usually a tube.

The various in-line mixers or blenders available currently differ substantially as to the types of baffles or elements used to obtain static mixing. One type of unit consists of a series of helical elements, flat planes twisted $180^{\circ}$, aligned axially end-to-end, each at $90^{\circ}$ angles to the preceding element, with alternating right and left hand twists (Kenics, Danvers, Massachusetts/Static Mixer). In another in-line mixer utilizing a number of parallel corrugated metal or plastic sheets (a honeycomb-like element), the corrugation angle of adjacent layers in the element (baffle) is reversed with respect to the mixer axis. Inclined corrugations of adjacent sheets thus intersect and form a multitude of mixing cells. The streams entering the mixing cells are rearranged due to extensional and shearing forces and subsequently divided into new streams each of which leaves the mixing cell in a different direction. Both streams, upon arriving at the next corrugation intersection, are again rearranged and divided into two new flows each of which in turn departs in a new direction for further rearranging and subdivision. Adjacent mixing elements in the fluid flow path may be rotated 90° providing a third dimension to the two dimensional mixing pattern in the first element. The foregoing in-line mixer is available from Koch Engineering Company, Wichita, Kansas.

An in-line mixer offering variable turbulence by varying element-to-element relationship is supplied by Lightnin Mixing Equipment Company, Incorporated, Rochester, New York. The Lightnin In-Line Blender contains a series of elements to make up a helical flight and a sequence of opposed right and left hand flights make up the standard module.

The expression "in-line mixer", as used herein and in the appended claims, is intended to refer to the types of mixers described above and in particular, to those baffled in-line mixers which give high rates of mixing. The expression "substantially uniform particle size" as used in the specification and claims refers to polymer beads of narrow particle size distribution from monomer or comonomer droplets formed as a result of mixing the monomer and aqueous phases in an in-line mixer as defined above.

The so-called "Standard Deviation" is an accepted measure of particle distribution. The preferred products of the invention exhibit Standard Deviations normally below 100 microns, and often in the range of 40-90 microns ($\mu$). Lower micron sizes indicate narrower (preferred) particle size distribution. For example a Standard Deviation of 50 microns indicates that 2/3 by weight of all the particles are within 50 microns of the mean particle diameter. Products produced by the prior art kettle process normally have a Standard Deviation well above 100 microns, typically about 125-250 microns.

We have further found that in-line mixers with a relatively large number of baffle elements, at least six, with 10 or more being preferred, provide outstanding suspensions by the present invention. In some in-line mixers, the mixing effect becomes essentially independent of the mixer diameter since the geometry of the mixing cell itself remains unchanged (e.g., Koch mixer). In other mixers it will be necessary to extend the mixer length to accomplish a given mixing task as flow and mixer diameter increase. An alternative to larger diameter mixers is to add a number of in-line mixers in parallel to avoid undue length of mixers.

Although each in-line mixer has its own particular characteristic, it has generally been found desirable to mix at high flow rates and, in general, and in particular in the case of the Koch Mixer, a flow rate of at least about 0.8 $1/min/cm^2$ of cross-sectional area is most desirable. A preferred flow rate is above about 5.0 $1/min/cm^2$; with a rate of at least about 10.0 $1/min/cm^2$ being preferred for producing smaller average particle diameters. In general, and in particular for the Koch mixer, a hydraulic diameter of from 0.25 cm to 1.55 cm is preferred.

The temperature of the monomer or monomer mixture passing through the static mixer is not critical to the invention except insofar as it might effect viscosity or cause polymerisation during mixing. Normally a temperature within the range of 20-45°C is suitable for mixing. Although the principle of in-line mixing is applicable to all ratios of monomers to aqueous suspension media, it is highly preferable to use the most monomer possible to maximize production in the batch kettles. In this regard, it is preferable to use monomer levels of 20-65% by volume of the total suspension, even more preferably 45-60% by volume of the suspension. A paddle agitator rate of 10-25 rpm in the reactor kettle is generally suitable, so long as the monomer droplets do not coagulate.

The types of monomers which can be suspended utilizing in-line mixing are those known heretofore as useful in suspension polymerisation. As a preferred class of monomers, there are those monomers useful in the formation of ion exchange copolymers including the monovinylidene monomers and polyvinylidene monomer crosslinkers. It is most common to utilize a mixture of 1) a polyvinylidene monomer containing a plurality of non-conjugated $CH_2$=C< groups, which acts as a crosslinking agent and 2) a monovinylidene monomer, either aromatic or aliphatic. If desired, the polymer may comprise essentially all of one type. Suitable polyvinylidene crosslinking monomers include divinylbenzene, divinylpyridene, divinyltoluenes, divinylnaphthalenes, diallyl phthalate, ethylene glycol diacrylate, ethylene glycol dimethacrylate, Trimethylolpropene trimethacrylate, neopentyl glycol dimethylacrylate bis-phenol A dimethacrylate, pentaerythritol tetra- and trimethacrylates, divinylxylene, divinylethylbenzene, divinylsulfone, divinylketone, divinylsulfide, allyl acrylate, diallyl maleate, diallyl fumarate, diallyl succinate, diallyl carbonate, diallyl malonate, diallyl oxalate, diallyl adipate, diallyl sebacate, divinyl sebacate, diallyl tartrate, diallyl silicate, triallyl tricarballylate, triallyl aconitate, triallyl citrate, triallyl phosphate, N,N'-methylene diacrylamide, N,N'-methylene dimethylacrylamide, N,N'-ethylene diacrylamide, trivinyl benzene, trivinyl naphthalene, polyvinyl anthracenes and polyallyl and polyvinyl ethers of glycol, glycerol, pentaerythritol, resorcinol in the monothio or dithio derivatives of glycols.

Suitable monovinylidene monomers include esters of acrylic acid, such as methyl acrylate, ethyl acrylate, propyl acrylate, isopropyl acrylate, butyl acrylate, t-butyl acrylate, ethylhexyl acrylate, cyclohexyl acrylate, isobornyl acrylate, benzyl acrylate, phenyl acrylate, alkylphenyl acrylate, ethoxymethyl acrylate, ethoxyethyl acrylate, ethoxypropyl acrylate, propoxymethyl acrylate, propoxypropyl acrylate, ethoxyphenyl acrylate, ethoxybenzyl acrylate, ethoxycyclohexyl acrylate, the corresponding esters of methacrylic acid, styrene, o-, m- and p-methyl styrenes and o-, m-, and p-ethyl styrenes, vinyl naphthalene, vinyl toluene and dimethyl itaconate. A class of monomers of particular interest consist of vinyl aromatic monomers such as styrene and the esters of acrylic and methacrylic acid with a $C_1$-$C_{10}$ aliphatic alcohol.

The process is suitable for the manufacture of both gel type polymers and macroporous (MR) polymers, that is polymers containing a macroreticular structure. As is well-known in manufacturing the MR polymers it is necessary that a solvent (precipitating agent) be incorporated in the monomer mixture prior to forming the suspension. Suitable precipitating agents are disclosed in UK Patent Nos. 932,125 and 932,126.

The polymerisation reaction is carried out in the presence of a free radical catalyst which is normally added to the organic phase prior to forming the suspension. Suitable initiators (catalyst) which provide free radicals to function as reaction initiators include benzoyl peroxide, t-butyl hydroperoxide, lauryl peroxide, cumene hydroperoxide, tetralin peroxide, acetyl peroxide, caproyl peroxide, t-butyl perbenzoate, t-butyl diperphthalate, methyl ethyl ketone peroxide. Other catalysts include peroxy esters such as t-butyl peroctoate and the peroxydicarbonates (see Dutch Application No. 7806892). The catalyst is usually included in an amount of about 0.01% to about 5% by weight of the monomer mixture.

The aqueous phase preferably contains suspension stabilizers to prevent coalescence of the monomer droplets as they are formed. Suitable suspending agents for aqueous dispersions are very well known in the art and include such materials as the ammonium salt of a styrene maleic anhydride copolymer, carboxymethylcellulose, bentonite or magnesium silicate dispersion. Various surfactants are also known as useful suspending adjuncts. In addition to suspending agents, it is not uncommon to utilise salt in the aqueous suspending medium in order to "salt out" any water-soluble monomers which may be present in the monomer phase.

A typical aqueous medium comprises, in addition to water:
Padmac A------1-3.75% (poly(dialkyldimethylammonium chloride) dispersant)
Pharmagel-----0.02-0.3% (protective colloid)
Boric Acid----0.1-2.0% (buffer)
pH-----------8 - 11

We investigated those principal parameters involved in suspension formation utilising in-line mixers shown in Table I which follows:

TABLE  I

PARAMETERS INVESTIGATED IN EVALUATION

OF IN-LINE MIXERS (KOCH)

| Mechanical | Chemical |
|---|---|
| Flow Rate | Aqueous Viscosity |
| Number of Elements | Density of Phases |
| Volume Percent of Monomer | Interfacial Tension |
| Entrance Conditions | |
| Hydraulic Diameter of Elements | |

Flow Rate   (Styrene and Vinylbenzylchloride (VBC) Monomers)

The single most important parameter governing suspension created by the in-line mixers is flow rate.  The shear rate in the mixer elements is proportional to the total flow rate. As the flow rate increases, the mean particle size and standard deviation of the resulting distribution decreases (see Figure 3).  Table II shows some relationships between flow rate and the resulting distributions for both VBC and styrene resins.  All results were obtained with 10 1" Koch elements.

The particle size distributions are unchanged by minor variations in the overall flow rate, as illustrated by the results presented in Table III.  In this and the subsequent Tables gpm indicates U.S. gallons per minute.

TABLE  II

EFFECT OF FLOW RATE ON IN-LINE MIXER SUSPENSIONS

| System | Flow Rate (gpm) | Average Particle Size (μ) | Standard Deviation (μ) | Uniformity Coefficient |
|---|---|---|---|---|
| Styrene | 5.5 | 138 | 51 | 2.07 |
| Styrene | 5.0 | 161 | 61 | 2.14 |
| Styrene | 4.5 | 272 | 80 | 1.7 |
| Styrene | 2.4 | 343 | 97 | 1.68 |
| VBC | 2.4 | 371 | 94 | 1.58 |
| VBC | 1.0 | 482 | 141 | 1.72 |

## TABLE III

### STABILITY OF IN-LINE MIXER RESULTS

### TO MINOR VARIATIONS IN FLOW RATE

| Run # | Flow Rate (gpm) | Mean Size (μ) | Standard Deviation (μ) | Yield in −45+60 Mesh Cut |
|---|---|---|---|---|
| 1 | 3.2 | 286 | 93 | 48% |
| 2 | 3.3 | 287 | 87 | 49% |
| 3 | 3.4 | 258 | 82 | 51% |
| 4 | 3.4 | 244 | 83 | 44% |

Number of Elements

We investigated whether 4-6 elements are sufficient to obtain an equilibrium drop size distribution using the Koch mixer. Most runs done in the in-line mixer used 10 elements. A study involving Koch mixers investigated the effect of reducing the number of elements in the mixer. Table IV below shows how, at a flow rate of 3.4 gpm, the distribution degrades as the number of elements is decreased.

## TABLE IV

### EFFECT OF NUMBER OF ELEMENTS ON

### DISPERSION CREATED IN KOCH MIXERS

| Number of Elements | Average Particle Size (μ) | Standard Deviation (μ) | Uniformity Coefficient | Flow Rate (gpm) | % in −30+50 Mesh Cut |
|---|---|---|---|---|---|
| 10 | 157 | 32 | 1.42 | 3.4 | -- |
| 5 | 370 | 131 | 1.99 | 3.4 | 68 |
| 5 | 322 | 101 | 1.81 | 4.1 | 60 |
| 2 | 632 | 334 | 3.52 | 3.4 | 47 |

We also investigated the effect of increasing the number of elements in low flow runs through the in-line mixer. Table V below shows that for a given flow, doubling the number of elements sharpens the curve and decreases the mean particle size.

## TABLE V

### EFFECT OF THE NUMBER OF ELEMENTS

#### IN LOW FLOW EXPERIMENTS

| Flow Rate (gpm) | Number of Elements | Average Particle Size ($\mu$) | Standard Deviation ($\mu$) | Uniformity Coefficient |
|---|---|---|---|---|
| 1.0 | 10 | 482 | 141 | 1.7 |
| 1.0 | 20 | 405 | 115 | 1.7 |
| 1.5 | 10 | 400 | 105 | 1.6 |
| 1.5 | 20 | 355 | 92 | 1.6 |

Volume Percent of Monomer

If the monomer fraction of flow fed to the in-line mixer elements could be maximized, it would be a significant advantage for the device. The removal of volume percent monomer as a limiting parameter is important as it allows the formation of a suspension that can be directly fed to a kettle for curing, negating the need for a concentration step. It was not expected that the distribution would be very sensitive to this parameter, as the dispersion was protected from coalescence by additives in the aqueous flow. It might be expected that the fraction of monomer in the flow is important where this protection does not occur because in such a case, as the volume fraction of monomer increases, the opportunity for coalescence would also increase, creating larger mean particle sizes. Table VI shows that particle distributions formed in Koch mixers are relatively insensitive to the monomer fraction, while those formed in Kenics mixers are not.

## TABLE VI

### EFFECT OF MONOMER FRACTION OF FLOW ON DISPERSION

10 1"

| Koch Elements* Volume Fraction of Monomer | Average Particle Size ($\mu$) | Standard Deviation ($\mu$) | Uniformity Coefficient | % in -30+50 Mesh Cut |
|---|---|---|---|---|
| 20 | 327 | 86 | 1.61 | 66 |
| 40 | 338 | 99 | 1.72 | 68 |
| 50 | 357 | 92 | 1.58 | 79 |

*Total flow 2.4 gpm with large hydraulic radius elements.

TABLE VI Continued

| 12 1" Kenics Elements Volume Fraction of Monomer | Average Particle Size (μ) | Standard Deviation (μ) | Uniformity Coefficient | % in -30+50 Mesh Cut |
|---|---|---|---|---|
| Total Flow 17 | 446 | 112 | 1.57 | 83 |
| 3.46 gpm 35 | 598 | 205 | 1.94 | 50 |
| Total Flow 10 | 605 | 194 | 1.84 | 50 |
| 3.0 gpm 24 | 720 | 234 | 1.89 | 34 |

Entrance Conditions

Monomer and aqueous media are preferably fed to the in-line mixer through two concentric pipes, monomer entering through the inner pipe. Table VII below shows that the decreasing diameter of this monomer tube has no effect on the distribution (normal conditions being 0.25" diameter).

TABLE VII

EFFECT OF MONOMER FEED PIPE DIAMETER

ON PARTICLE SIZE DISTRIBUTION

| Monomer Pipe Diameter (in) | Flow Rate (gpm) | Average Particle Size (μ) | Standard Deviation (μ) |
|---|---|---|---|
| 0.25 | 2.4 | 329 | 88 |
| 0.125 | 2.4 | 301 | 89 |

This result confirms that no severe entrance problems are encountered in scaling from 1 inch elements to 2 inch elements.

Hydraulic Diameter on Koch Mixer

Decreasing the hydraulic diameter (a measure of the channel diameter) should increase the shear level in the in-line mixer for a given flow rate. Thus, smaller mean particle sizes should be expected in the elements with the smaller hydraulic diameter as shown in the table below.

## TABLE VIII
### EFFECT OF HYDRAULIC DIAMETER
### ON PARTICLE SIZE DISTRIBUTION

| Hydraulic Diameter (cm) | Flow Rate (gpm) | Mean Particle Size ($\mu$) | Standard Deviation ($\mu$) |
|---|---|---|---|
| 0.269 | 3.4 | 199 | 88 |
| 0.269 | 2.4 | 284 | 79 |
| 0.269 | 2.0 | 347 | 95 |
| 0.358 | 3.4 | 258 | 92 |
| 0.358 | 2.4 | 343 | 97 |

However, the distribution itself is no sharper at a given mean particle size as shown by the standard deviation, whether produced in a large or small hydraulic diameter element. Thus, this is not an independent parameter controlling the breadth of the distribution.

Chemical Variables

Viscosity of Aqueous Phases (Styrene)

It was believed that changes in viscosity of the various phases would influence the performance of the in-line mixer by changing the drag forces of the particles formed in the mixing elements. A series of three styrene-5.5% DVB distributions all created at a flow rate of 1.5 gpm were produced. One was run normally, one had the Pharmagel (stabilizer) required added after the dispersion had been created in the in-line mixer, and one was formed by passing water and monomer through the elements, adding all protective and dispersant chemicals after the suspension had been formed. The range of aqueous viscosities in the in-line mixer ranged from 1 cp in the case of the pure water to nearly 10 cp in the aqueous phase containing all the chemicals. The study clearly shows that over this range the viscosity of the aqueous phase has no influence on the distribution.

Density

Monomer density has little effect on distributions formed in the in-line mixer. This can be shown in the following table presenting data from both styrene and VBC experiments. At the same flow rate, the distribution was the same regardless of whether the monomer phase was denser (VBC) than the aqueous phase or lighter (styrene).

### TABLE IX
#### EFFECT OF DENSITY ON DISTRIBUTION

| System | Flow Rate (gpm) | Mean Particle Size (µ) | Standard Deviation (µ) |
|--------|-----------------|------------------------|------------------------|
| Styrene (O = 0.9) | 2.4 | 343 | 97 |
| VBC (P = 1.2) | 2.4 | 388 | 99 |

Interfacial Tension

The effect of interfacial tension is more difficult to evaluate than other chemical parameters, as it is difficult to change it independently in any given system. By inference, however, it is not thought to be important in regards to in-line mixer distributions. This is due to the lack of influence of the other chemical parameters. Changing the density of the system (by changing monomer) and changing the aqueous viscosity also changed the interfacial tension of the system. Yet these changes did not affect the distribution, so that interfacial tension is not thought important.

The polymers and copolymers produced by the process of this invention are particularly suitable as intermediates for the manufacture of various end products, and in particular for use in the preparation of ion exchange resins, both anion and cation types, whether of the character having homofunctional or mixed functional groups. Some of the well-known methods for preparing anion exchange resins from copolymers are set forth in U.S. Patent No. 2,591,573, and these methods can be employed with copolymers made by the process of the present invention. Cation resins may be prepared from the intermediate copolymers by incorporation of sulfonic acid, carboxylic acid or other cation exchange groups as taught in U.S. Patent No. 3,147,214 and U.S. Patent No. 3,201,357.

Example 1

A Static Mixer (trademark of Kenics Corporation) was tested for manufacturing polymer beads from in-line mixed initiated monomer in an aqueous phase formulated with a dispersant system. The dispersant system was designed to maintain the droplet integrity in the absence of agitation for a period of time at 80°C sufficient to allow polymerisation to reach about 30% conversion. At 30% conversion to polymer, droplets of the monomer mixture containing styrene, divinylbenzene and ethyl vinylbenzene maintain their identity without any external shearing or mixing force. At the point of 30% conversion of monomer to polymer the beads were transferred to a stirred kettle and were heated until polymerisation was 99.0% to 99.5% completed. The polymer beads were cleaned up and the particle size characteristics were measured. The characteristics of the particle dimensions are given herein in Table X along with the rate of mixing of the two liquid phases through the Static Mixer and the ratio of the volumes of the two liquid phases being passed through the Static Mixer simultaneously.

The Kenics Static Mixer that was used had an internal diameter of 4.93 mm with mixing elements that had a screw twist. The element length for one complete twist was 2 diameters or 9.86 mm. In the testing of the Kenics mixer the number of baffle elements was varied from 17 to 8, the volume ratio of monomer mixture to aqueous medium was varied from 0.211 to 1.466, the total flow rate of liquid through the mixer varied from 229 ml/min to 609 ml/min, and the best uniformity coefficient obtained was 1.560. A uniformity coefficient of 1.560 is better than that obtained with a stirred batch reactor (1.7-1.8 uniformity coefficient).

The particle size data produced by polymerisation following the foregoing procedure are presented in Table X along with the parameters of formation of the monomer droplets prior to polymerisation. The experimental results very clearly show that polymer beads useful in ion exchange synthesis and manufacturing could be made by passing the appropriate monomer stream in intimate contact with the formulated aqueous medium through a Static Mixer of the Kenics design.

TABLE X

PARTICLE SIZE RESULTS FROM BEAD FORMATION

WITH A KENICS IN-LINE MIXER

| Run # | Flow Rate ml. min.$^{-1}$ | Monomer to Aq. Ratio by Volume | UC[1] | HMS[2] mm. | Average Bead Diam., mm. | Slope[3] | No. of Mixing Elements |
|---|---|---|---|---|---|---|---|
| 1 | 229.25 | 1.02876 | 1.806 | 0.787 | 0.775 | 0.851 | 17 |
| 2 | 300.5 | 0.90190 | 1.888 | 0.665 | 0.668 | 0.779 | 17 |
| 3 | 378 | 0.90909 | 1.750 | 0.436 | 0.457 | 0.448 | 17 |
| 4 | 387.5 | 0.21094 | 1.699 | 0.605 | 0.661 | 0.578 | 17 |
| 5 | 505 | 0.6946 | 1.884 | 0.344 | 0.343 | 0.389 | 17 |
| 6 | 438 | 0.6846 | 1.838 | 0.374 | 0.377 | 0.407 | 17 |
| 7 | 372 | 0.6986 | 1.811 | 0.423 | 0.442 | 0.455 | 17 |
| 8 | 304 | 0.7273 | 1.734 | 0.463 | 0.484 | 0.469 | 17 |
| 9 | 311 | 0.9684 | 1.941 | 0.582 | 0.612 | 0.706 | 17 |
| 10 | 490 | 1.0248 | 1.794 | 0.385 | 0.396 | 0.406 | 17 |
| 11 | 490 | 1.0248 | 2.078 | 0.475 | 0.564 | 0.638 | 17 |
| 12 | 404.3 | 1.0015 | 1.710 | 0.438 | 0.462 | 0.431 | 17 |
| 13 | 602 | 1.0067 | 1.560 | 0.412 | 0.418 | 0.339 | 14 |
| 14 | 402.3 | 1.0115 | 1.486 | 0.520 | 0.510 | 0.377 | 14 |
| 15 | 494.3 | 1.00935 | 1.756 | 0.552 | 0.582 | 0.554 | 14 |
| 16 | 502.9 | 1.1658 | 1.774 | 0.581 | 0.596 | 0.600 | 14 |
| 17 | 493.3 | 1.4665 | 1.781 | 0.562 | 0.580 | 0.588 | 14 |
| 18 | 494.3 | 1.00935 | 1.624 | 0.432 | 0.486 | 0.370 | 8 |

--------------------------------------------------------------

(1) UC is the uniformity coefficient;

$$UC = \frac{\text{Particle Dia. at 40 Cum. Wt. \%}}{\text{Particle Dia. at 90 Cu. Wt. \%}}$$

The uniformity coefficient is not a true constant but decreases with increasing particle size.

(2) HMS is the harmonic mean size;

$$HMS = \frac{1000}{\left(\frac{x}{dp}\right)}:$$ where x is the fraction retained within sieve hole diameters $d_1$ and $d_2$;

$$dp = (d_1 d_2)^{1/2}$$

(3) Slope is the slope of the straight line drawn through the particle diameter at the 40 cum. wt. % and the particle dia. at the 90 cum. wt. % of the plot on probability graph paper of particle dia. vs. cum. wt. %. The slope is a true constant and not a function of particle diameter.

-----------------------------------------------------

The composition of the various streams utilized in this example are as given below.

I. Aqueous Medium:

Typical Charges: per five gallon volume

| | Weight Grams | Wt. % of Added City $H_2O$ | Weight % of Soln. |
|---|---|---|---|
| A. *Pharmagel Super XXP | 4.00 | 0.01057 | 0.0104089 |
| B. **Acrysol A-5 (12.5% Aq. Solution) | 150.00 | 0.1057[1] | 0.1040891 |
| C. Caustic (50% Aq.Soln.) | 47.00 | 0.1453[1] | 0.1431225 |
| D. Boric Acid | 75.00 | 0.3963 | 0.3903342 |
| E. City Water | 18,992.30 | (5 gal.) | 98.4802985 |

[1] Pure or neat materials without $H_2O$

Total wt. of aqueous phase 19,214.30 grams
Solution Water introduced with Reagents = 167.5g.
(0.8717465)

-----------------------------------------------------

*polypeptide molecular weight 20,000 (a gel)
**polyacrylic acid in salt form

-----------------------------------------------------

II. Monomer Mix

Typical Charges: per five quart volume

| | Weight Grams | Moles | Weight % of Charges |
|---|---|---|---|
| A. Styrene | 2,691.00 | 25.8372 | 84.094 |
| B. Divinylbenzene[1] | 476.72 | 1.9663 | 8.000 |
| C. Methylacrylate | 16.00 | 0.1858 | 0.500 |
| D. Acrylonitrile | 32.00 | 0.6031 | 1.000 |
| E. Benzoylperoxide[2] | 15.66 | 0.0504 | 0.380 |

-----------------------------------------------------

(1) Calculation based on commercial DVB of 53.70 weight %

(2) Wet material BPO of 78.0 weight %

------------------------------------------------------------

Procedure (Aqueous Medium)

A clean, dry five-gallon pail was filled to approximately one-half its volume with warm city water ($40-50^{\circ}$C). The above charges of (A) through (D) were preweighed into four ounce jars and then added to the pail with stirring to aid solution.

The volume of solution was adjusted to the full capacity of five gallons with city water. The solution was ready to be transferred to the aqueous reservoir which is a stainless steel, box-type container of approximately ten gallons capacity. Repeat the procedure by preparing a second 5 gallons of aqueous solution. After mixing the aqueous solution by an electric driven mixer for 10-15 minutes, a sample was removed for pH measurement. The pH of the aqueous solution was maintained in the range of 8.3 - 8.7. Temperature of the solution was increased to $70-75^{\circ}$C. (Electric immersion heaters are used for temperature control.) During the heat-up of solution, the pumping of the aqueous feed stock was started using a centrifugal pump (4 gpm at 9 ft. of water) and the flow rate regulated by a calibrated rotameter. While recycling the aqueous solution, preparation of another five gallon volume of solution (total 15 gal.) was used to maintain a full capacity reservoir.

Procedure.(Monomer Mix)

The charges of Styrene (A), Divinylbenzene (B), Methacrylate (C) and Acrylonitrile (D) were weighed into a four-liter beaker and mixed thoroughly for 5-10 minutes with a teflon paddle stirrer. Benzoylperoxide (E) was added to the monomer mix just before the start of the mixing operation. The initiated monomer charge was transferred to the five-quart stainless steel keg (monomer reservoir) by gravity filtration through Reeve Angel coarse filter paper. The monomer reservoir was equipped for discharging the mixed monomer under nitrogen pressure of 40-50 psig during in-line mixing.

Example 2 (Koch Mixer)

The following monomers were metered into a monomer mix tank in the proportions indicated: 6,529 pounds of styrene and 471 pounds of divinylbenzene (commercial grade - 55% DVB, 45% ethylvinylbenzene), both of which are liquid monomers. The monomer mix was held at $10^{\circ}$ - $15^{\circ}$C and was sparged with 8% oxygen (in nitrogen) for 1½ hours. Prior to introduction through the in-line mixer, 30 pounds of t-butyl peroctoate was introduced to the monomer mix.

Preparation of the aqueous phase was accomplished by the metered introduction into the aqueous tank of: 12,000 pounds city water, 21 pounds boric acid, 26 pounds of 50% caustic, and 460 pounds of PADMAC A (poly(diallyl dimethylammonium chloride). The pH of this solution was maintained between 10 and 11. Just prior to feeding through the static mixer, 28 pounds of Pharmagel (gelatin) dissolved in 200 pounds of city water was added to the aqueous mix.

The aqueous mix and catalysed monomer mix were separately pumped to the entrance portion of the in-line mixer (Figure 1). This entrance consisted of two concentric pipes with diameters of four inches and 0.5 inches which abut the first mixer element. The monomer was pumped through the inner pipe and the aqueous mix through the outer pipe. The streams were then mixed as they passed through ten two-inch diameter Koch mixer elements, Model CY, 28-gauge with a hydraulic diameter of 0.361 cm. The flow rates through the elements were 29.9 liters/minutes, for both streams for a total flow rate of 59.8 liters/minute. As the streams passed through the mixer elements the monomer suspension was created. The suspension was passed into a 7571 liter polymerisation kettle where the suspension was polymerised. This was done by heating the batch to $75^{\circ}$C via steam heat and holding the batch at that temperature for 5 hours. The temperature was then increased to $95^{\circ}$ for 1 hour. The batch was centrifuged, dried, and screened for further processing. Analysis showed that the average particle size was 270 μ with 63% of the material laying between 45 mesh (0.35 mm) and 70 mesh (0.21 mm).

0005619

Claims:

1. A suspension polymerisation process wherein organic monomer-containing and aqueous phases are passed into intimate contact within a baffled in-line mixer, the total liquid flow rate through the mixer being at least $0.8/1/min/cm^2$ of the cross-sectional area of the mixer, to form an aqueous suspension of monomer-containing organic droplets which is then passed into a polymerisation vessel where it is heated to cause formation of polymer beads while undergoing sufficient agitation to achieve heat transfer without coagulation of the monomer droplets.

2. A process as claimed in claim 1 wherein the monomer-containing organic phase comprises from 45 to 60% by volume of the aqueous suspension.

3. A process as claimed in any preceding claim wherein the in-line mixer is of the type containing a number of parallel corregated sheets having an hydraulic diameter of from 0.25 to 1.55 cm.

4. A process as claimed in any preceding claim wherein the monomer-containing organic phase does not substantially contact the aqueous phase until both are within the baffled sections of the in-line mixer.

5. A process as claimed in any preceding claim wherein the total liquid flow rate through the mixer is at least 5 1/min/ $cm^2$ of mixer cross-sectional area.

6. A process as claimed in any preceding claim for producing polymer beads having an average particle diameter below 200 microns wherein the total liquid flow rate through the mixer is at least 10 1/min/$cm^2$ of mixer cross-sectional area.

7. Apparatus for carrying out the process of claim 1 comprising a baffled in-line mixer operably connected to a polymerisation vessel (25) having means for agitating (27) and heating the contents, the baffles (17) of the baffled mixer having an hydraulic diameter of from 0.25 cm to 1.55 cm.

8. Apparatus as claimed in claim 7 comprising in combination:
(a) a cylinder containing baffles (17);
(b) pipes (9, 7) for separately introducing liquids (19, 21) directly into the baffled sections to produce a suspension of one liquid in another, said pipes (9, 7) each having an end defining an orifice, at least one (8) of said pipe ends abutting and being in contact with a baffle (17) and said baffled sections having an hydraulic diameter of from 0.25 cm to 1.55 cm; and
(c) a polymerisation vessel (25) connected by piping (23) with the downstream end of the baffled cylinder.

9. Apparatus according to claim 7 or 8 wherein the hydraulic diameter is from 0.3 cm to 0.75 cm.

10. Apparatus according to claim 7, 8 or 9 wherein the pipes are concentric with one another.

11. Particles of suspension polymer, which have not been subjected to particle size separation, having an average particle diameter of less than 200 microns and a particle Standard Deviation of less than 100 microns.

12. Particles of suspension polymer produced by a process as claimed in any preceding claim.

13. Particles as claimed in claim 11 or 12 which have been reacted to introduce ion exchange functionality thereto.

1/2

*Fig.1.*

MONOMER
FEED TANK

AQUEOUS
FEED TANK

REACTOR

CENTRIFUGE

DRYING

STORAGE

FIG.2.

*Fig.2.*

*Fig.3.*

FLOW RATE
1 — 3.4 GPM
2 — 2.4 GPM
3 — 1.0 GPM

WEIGHT PERCENT ⟶

MICRONS

100   200   300   400   500   600   700   800   1000

SIEVE NO.

200   100   50   40   30   25   20   18

*Fig.4.*

A ≅ 20 RPM AGITATOR SPEED
B ≅ 30-35 RPM AGITATOR SPEED

WEIGHT PERCENT ⟶

MICRONS

100   200   300   400   500   600   700   800   1000

SIEVE NO.

200   100   50   40   30   25   20   18